# EUROPÄISCHE PATENTSCHRIFT

(11) **EP 2 709 789 B1**
(45) Veröffentlichungstag und Bekanntmachung des Hinweises auf die Patenterteilung: **17.06.2015**
(21) Anmeldenummer: 12719563.4
(22) Anmeldetag: 26.04.2012
(51) Int. Cl.: B23K 11/06, B23K 11/30

(54) **VORRICHTUNG UND VERFAHREN ZUM ELEKTRISCHEN ROLLNAHTSCHWEISSEN UNTER VERWENDUNG EINER DRAHTELEKTRODE**
APPARATUS AND METHOD FOR ELECTRICAL ROLLER SEAM WELDING USING A WIRE ELECTRODE
DISPOSITIF ET PROCÉDÉ DE SOUDAGE ÉLECTRIQUE À LA MOLETTE À L'AIDE D'UN FIL-ÉLECTRODE

(30) Priorität: 19.05.2011 CH 863112011
(43) Veröffentlichungstag der Anmeldung: 26.03.2014
(73) Patentinhaber: Soudronic AG, 8962 Bergdietikon (CH)
(72) Erfinder: TAIANA, Peter, CH-5432 Neuenhof (CH)
(74) Vertreter: Schalch, Rainer
(86) Internationale Anmeldenummer: PCT/CH2012/000091
(87) Internationale Veröffentlichungsnummer: WO 2012/155277

(56) Entgegenhaltungen:
- JP-A- 57 072 781
- JP-A- 61 242 769
- JP-A- 2001 062 568

## Beschreibung

### Technisches Gebiet

Die Erfindung betrifft eine Schweissvorrichtung zum elektrischen Rollnahtschweissen gemäss Oberbegriff des Anspruchs 1. Ferner betrifft die Erfindung ein Verfahren gemäss Oberbegriff des Anspruchs 5 sowie eine bevorzugte Verwendung des Verfahrens zum Rollnahtschweissen von Behälterzargen, siehe für beide Oberbegriffe, z.B., JP 57/072 781 A.

### Stand der Technik

Rollnahtschweissvorrichtungen sind bekannt und werden z.B. bei der Herstellung von Dosenzargen verwendet, was auch ein bevorzugtes Anwendungsgebiet der vorliegenden Erfindung ist. Beim Zargenschweissen laufen die Dosenzargen mit hoher Geschwindigkeit und möglichst geringen Abständen von aufeinander folgenden Zargen zwischen den Schweisselektrodenrollen hindurch. Die anfänglich noch entlang ihrer späteren Längsschweissnaht offenen Dosenzargen werden dabei auf ihrem Weg zur Schweisszone durch eine sogenannte Z-Schiene und in der Schweisszone durch Schweisswerkzeuge geschlossen und mit definierter Überlappung der Längsränder der Zarge in die Schweisszone gebracht, in welcher die elektrische Widerstandschweissung mit den Elektrodenrollen erfolgt. Auf den Elektrodenrollen läuft eine gemeinsame Drahtelektrode, welche frisch ab einer Vorratsrolle zugeführt und nach der Schweissung als Verbrauchsmaterial abgeführt wird. Die an einem Schweissarm angeordnete untere Elektrodenrolle befindet sich im Inneren der zu schweissenden Dosenzargen und wird nicht aktiv von einem eigenen Antrieb angetrieben, sondern indirekt durch die Drahtelektrode und die Dosenzargen. Die obere Elektrodenrolle, die sich ausserhalb der zu schweissenden Zarge befindet, wird durch einen aktiven Antrieb mit der gewünschten Schweissgeschwindigkeit angetrieben. Solche Vorrichtungen sind bekannt und z.B. im Dokument DE 40 31 825 A1 erläutert. Dort ist auch in Figur 1 ein Verlauf der Drahtelektrode in einer Schweissvorrichtung nach Stand der Technik ersichtlich. Es zeigt sich, dass die Schweissqualität, besonders bei hoher Durchlaufgeschwindigkeit von mehreren hundert Zargen pro Minute, stark von möglichen Geschwindigkeitsdifferenzen zwischen der unteren und der oberen Elektrodenrolle beeinflusst wird, auch wenn diese Differenz gering ist. JP 57 072781 A zeigt eine gattungsgemässe Schweissvorrichtung bzw. ein solches Verfahren.

### Darstellung der Erfindung

Der Erfindung liegt die Aufgabe zu Grunde, eine verbesserte Schweissvorrichtung zu schaffen, welche, auch bei grosser Schweissgeschwindigkeit, eine hohe Schweissqualität erzielt.

Diese Aufgabe wird mit den kennzeichnenden Merkmalen des Anspruchs 1 gelöst.

Dadurch, dass drei Antriebsstufen für den Antrieb der Drahtelektrode vorgesehen sind, welche im Drahtverlauf wie beansprucht angeordnet sind, ergibt sich eine konstantere Drahtgeschwindigkeit und Geschwindigkeitsdifferenzen zwischen den beiden Elektrodenrollen können minimiert werden. Es zeigt sich, dass dadurch symmetrische Schweissverhältnisse an der Zargeninnenseite der Naht und an der Zargenaussenseite der Naht besser erreichbar sind und die Schweissqualität erhöht wird. Es werden damit auch Unterschiede in der Drahtzugspannung minimiert, die entlang des Drahtverlaufs auf den Draht wirkt und es werden Laständerungen im Drahtantrieb verringert. Die Einwirkung der Drahtprofilierung vor der Schweissung und der Drahtzerhackung nach der Schweissung auf die Drahtschlaufe zwischen den beiden Elektrodenrolauf die Drahtschlaufe zwischen den beiden Elektrodenrollen wird deutlich verringert Es zeigt sich ferner, dass durch die drei Antriebsstufen ein gleichmässig geringerer Abstand zwischen aufeinanderfolgenden Zargen erzielbar ist. Dies ergibt ein geringeres Einschwingen der Elektrodenrollen auf Grund des Abstands.

Die Schweissvorrichtung ist so ausgestaltet, dass mindestens zwei der drei Antriebsstufen einen gemeinsamen Antriebsmotor für den Antrieb der Drahtelektrode aufweisen. Dies erlaubt eine einfache Konstruktion und einen gleichmässigen Einfluss der drei Antriebsstufen auf die Drahtelektrode. Besonders bevorzugt ist es deshalb, dass alle drei Antriebsstufen einen gemeinsamen Antriebsmotor aufweisen. Es kommen alle dem Fachmann bekannten steuerbaren oder regelbaren Motore in Frage, insbesondere Elektromotore. Die Antriebsstufen werden von der Steuerung der Schweissvorrichtung gesteuert. Der Antrieb der Drahtelektrode erfolgt mechanisch so, dass die Antriebsstufen je mindesten eine Antriebsrolle aufweisen, welche von der Drahtelektrode teilweise oder ganz umschlungen werden. Es erfolgt somit ein reibschlüssiger Antrieb der Drahtelektrode auf den Rollen der Antriebsstufen.

Dabei weisen die Antriebsrollen der Antriebsstufen unterschiedliche Durchmesser auf, wobei die Antriebsrolle der ersten Antriebsstufe einen kleineren Durchmesser hat als die Antriebsrolle der zweiten Antriebsstufe, und die Antriebsrolle der dritten Antriebsstufe einen grösseren Durchmesser hat als die Antriebsrolle der zweiten Antriebsstufe. Auf diese Weise ist es möglich, die Drahtzugspannung der Drahtelektrode zu bestimmen und Änderungen der Drahtzugspannung im Drahtverlauf mittels allen drei Antriebsstufen möglichst gering zu halten. Die Antriebsstufen bewirken dadurch eine definierte Drahtzugspannung und damit eine definierte elastische Drahtdehnung der Drahtelektrode entlang des Drahtverlaufs von der ersten Antriebsstufe zur zweiten Antriebsstufe und zur dritten Antriebsstufe. Die elastische Dehnung wird vorzugsweise definiert dort bewirkt, wo die Drahtelektrode um eine sehr kleine Umlenkrolle geführt wird, während ansonsten entlang des Drahtverlaufs in der Schweissvorrichtung vergleichsweise grosse Rollendurchmesser für die eingesetzten Rollen, insbesondere Umlenkrollen, verwendet werden. So ist es bevorzugt, dass im Drahtverlauf vor der ersten Elektrodenrolle, insbesondere direkt vor der ersten Elektrodenrolle, eine die Drahtelektrode umlenkende Rolle vorgesehen ist, deren Durchmesser im Bereich von 70% bis 30% des Durchmessers der ersten Elektrodenrolle liegt, und deren Durchmesser insbesondere bei ca. 50% des Durchmessers der ersten Elektrodenrolle liegt. Weiter ist es zum genannten Zweck bevorzugt, dass im Drahtverlauf nach der zweiten Elektrodenrolle, insbesondere direkt nach der zweiten Elektrodenrolle, eine die Drahtelektrode umlenkende Rolle vorgesehen ist, deren Durchmesser kleiner als ca. 50% des Durchmessers der zweiten Elektroderolle, und insbesondere Bereich von 40% bis 20% des Durchmessers der zweiten Elektrodenrolle liegt.

Das Verfahren ist durch die Merkmale des Anspruchs 5 bestimmt und weist die vorgängig für die Vorrichtung geschilderten Vorteile auf.

Bei dem Verfahren wird zur Beeinflussung der Drahtzugspannung auf die Drahtelektrode durch die Antriebsstufen Einfluss genommen, derart, dass der Draht durch drei Antriebe in den zwischen den Antrieben liegenden Bereichen elastisch gedehnt wird, indem der zweite Antrieb rascher erfolgt als der erste Antrieb und der dritte Antrieb rascher erfolgt als der zweite Antrieb. Dabei beträgt die die Dehnung vorzugsweise ca. 0.5%.

Es kann ferner durch den zweiten Antrieb auch auf die Drahtelektrode im Verhältnis zur eingestellten Schweissgeschwindigkeit Einfluss genommen werden und zwar bevorzugt so, dass der zweite Antrieb die Drahtelektrode ca. 0, 1% langsamer als die Schweissgeschwindigkeit antreibt.

Die bevorzugte Verwendung der Schweissvorrichtung bzw. Anwendung des Verfahrens ist das Längsnahtschweissen von Dosenzargen. Dabei kommen die durch die Schweissvorrichtung bzw. das Verfahren und die bevorzugten Ausgestaltungen möglichen Vorteile zum Tragen, da beim Dosenschweissen mit sehr hohen Kadenzen fehlerfreie und dichte Schweissnähte erzeugt werden müssen.

### Kurze Darstellung der Zeichnungen

Im Folgenden werden Ausführungsbeispiele der Erfindung anhand der Zeichnungen näher erläutert. Dabei zeigt
Figur 1 eine schematisch dargestellte Schweissvorrichtung mit Ansicht des Drahtverlaufs in der Schweissvorrichtung; und
Figur 2 den in linearer Abfolge dargestellten Drahtverlauf gemäss Figur 1 zu dessen besseren Erläuterung.

### Wege zur Ausführung der Erfindung

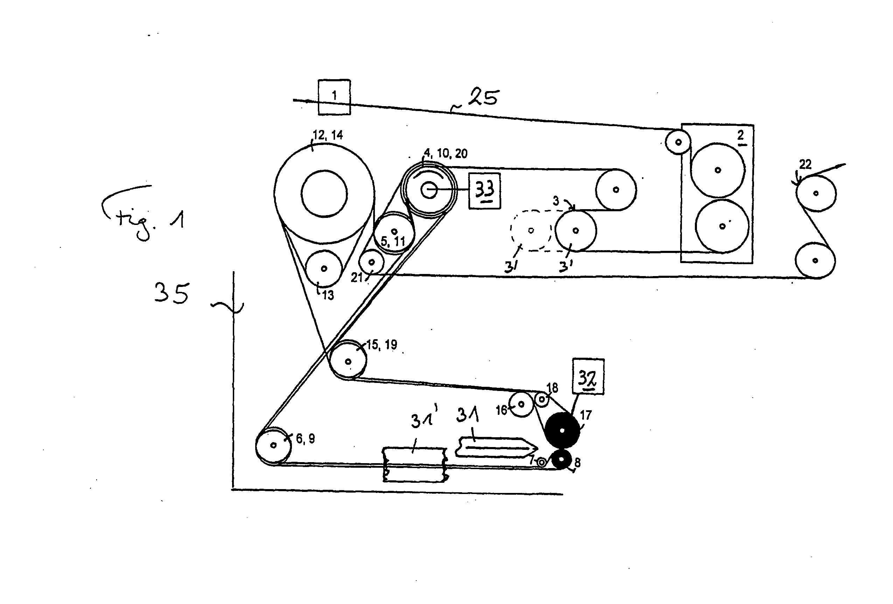

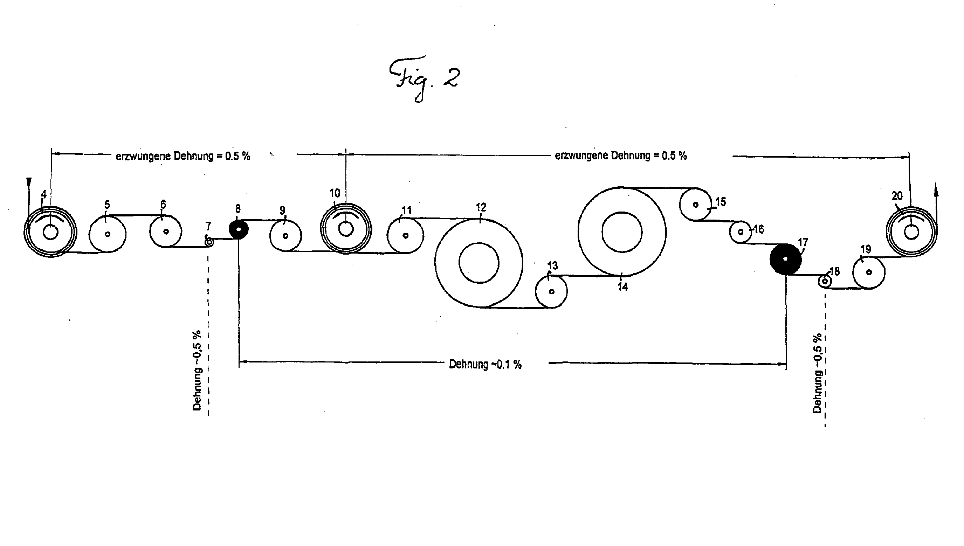

Anhand der Figuren 1 und 2 werden der Aufbau und die Funktion eines Ausführungsbeispiels der Erfindung erläutert. Figur 1 zeigt mit zwei Linien grob angedeutet und schematisch eine elektrische Widerstandsschweissmaschine bzw. Schweissvorrichtung 35 mit den einander gegenüberliegenden Elektrodenrollen 17 und 8. Die Elektrodenrollen sind elektrisch mit der nicht dargestellten Schweissstromerzeugung der Schweissvorrichtung verbunden. Zwischen den Elektrodenrollen 17 und 8 liegt somit die Schweisszone bzw. zwischen den Elektrodenrollen hindurch verläuft der Schweisspfad für die zu schweissenden Gegenstände, bevorzugt die Dosenzargen. Figur 1 zeigt weiter die Elemente der Schweissvorrichtung, die den Drahtverlauf bestimmen. Figur 1 zeigt dabei eine Darstellung, bei welcher die Anordnung der den Drahtverlauf bestimmenden Elemente so dargestellt ist, wie er bei einer realen Schweissvorrichtung sein kann. Figur 2 hingegen zeigt die linear angeordnete Darstellung der den Drahtverlauf bestimmenden Elemente von Figur 1, welche nur zur erklärenden Erläuterung der Reihenfolge der Elemente entlang des Drahtverlaufs dient und nicht so bei einer realen Vorrichtung eingesetzt würde.

Eine solche Schweissvorrichtung dient gemäss der hier bevorzugten Verwendung zum Schweissen der Längsnähte von Dosenzargen 31'. Diese werden aus ebenen Blechabschnitten in eine nur angedeutete sogenannte Z-Schiene 31 hinein gerundet und entlang dieser zu den Elektrodenrollen der Schweissvorrichtung gefördert, wobei die Längskanten der noch offenen Zarge zur Überlappung kommen. Mittels nicht dargestellter Werkzeuge, insbesondere aus Rollenkränzen, wird die Überlappung im Schweissbereich genau eingestellt und die Überlappnaht wird mit den Elektrodenrollen geschweisst. Die in dieser bevorzugten Verwendung "untere" Elektrodenrolle 8, die nachfolgend jeweils als erste Elektrodenrolle 8 bezeichnet wird, liegt dabei in der Dosenzarge und die bei dieser Verwendung der Schweissvorrichtung "obere" Elektrodenrolle 17, die nachfolgend als zweite Elektrodenrolle bezeichnet wird, liegt ausserhalb der Zarge bzw. ausserhalb des Schweissguts. Diese zweite Elektrodenrolle wird drehend durch einen gesteuerten oder geregelten Antrieb 32 der Schweissvorrichtung angetrieben, der in der Figur nur angedeutet ist und durch welchen die Soll-Schweissgeschwindigkeit bestimmt wird. Dies ist dem Fachmann bekannt und muss hier nicht näher erläutert werden. Ebenfalls ist es bekannt, dass auf den Elektrodenrollen eine Drahtelektrode 25 läuft, über welche die eigentliche Zufuhr des Schweissstroms in die Schweissnaht erfolgt. Die eingangs erwähnte Schrift DE 40 31 825 A1 beschreibt eine Schweissvorrichtung der bekannten Art.

Bei der hier gezeigten Schweissvorrichtung ist ein Drahteinlauf 1 für den die Drahtelektrode bildenden Draht vorgesehen, wobei der Drahteinlauf für die vorliegende Erfindung ohne besondere Bedeutung ist und in der Figur 1 nur angedeutet ist. Hier tritt der von einer Vorratsrolle zugeführte Draht in die Schweissvorrichtung ein. Die Schweissvorrichtung weist in der Regel eine Profilierungsstation 2 für den Draht auf, in welcher der Draht auf bekannte Weise mit einem für die Schweissung vorteilhaften Profil versehen wird. Eine Drahtausgleichsstation 3 mit mindestens einer hin- und her beweglichen Rolle (durch die Rolle 3' in zwei verschiedenen Stellungen angedeutet) schafft einen Ausgleich bzw. einen Puffer zwischen der Drahtzulieferung aus der Profilierungsstation und dem Drahtantrieb in der Schweissvorrichtung, wobei dies insbesondere beim Anfahren und Anhalten der Schweissvorrichtung von Bedeutung ist. Dies ist dem Fachmann bekannt und wird hier nicht weiter erläutert.

Bei dem erfindungsgemässen Beispiel folgt im Drahtverlauf der Vorrichtung die erste Antriebsstufe 4 für den Draht und hier setzt auch die Darstellung von Figur 2 an, welche diese Antriebsstufe 4 als erstes Element von Figur 2 zeigt. In der Antriebsstufe 4 wird der Draht von einem Antrieb 33 der Antriebsstufe 4 mit einer vorbestimmten Geschwindigkeit angetrieben. Dies erfolgt indem der Draht eine von einem Antriebsmotor des Antriebs angetriebene Antriebsrolle der Antriebsstufe 4 teilweise oder ganz umschlingt, so dass er reibschlüssig durch die Antriebsrolle mit deren Geschwindigkeit gefördert wird. Danach verläuft der Elektrodendraht 25 über zwei Umlenkrollen 5 und 6 zum unteren Schweissarm der Schweissvorrichtung, bei welchem sich auch die angedeutete Z-Schiene 31 befindet, so dass die Drahtelektrode entlang des unteren Schweissarms zur unteren Schweissrolle 8 verläuft, die vom Draht teilweise umschlungen wird und wo der Draht die Elektrode zur Schweissung der Dosenzarge bildet. Vor der unteren Schweissrolle 8 ist eine Umlenkrolle 7 vorgesehen, welche die Drahtelektrode zur Schweissrolle 8 hin umlenkt. Diese Umlenkrolle 7 weist bevorzugt einen Durchmesser auf, der kleiner ist als der Durchmesser der unteren Elektrodenrolle 8, und insbesondere nur 70% bis 30% des Durchmessers der Elektrodenrolle beträgt und insbesondere ca. 50% von deren Durchmesser beträgt.

Der Draht wird nach der unteren Schweissrolle 8 über eine weitere Umlenkrolle 9 aus dem Schweissarm hinaus zur zweiten Antriebsstufe 10 geführt. Auch die zweite Antriebsstufe 10 weist eine angetriebene Antriebsrolle auf, welche den Draht reibschlüssig fördert, indem der Draht die Rolle teilweise oder ganz umschlingt. Bevorzugt weist die Antriebsstufe 10 den selben Antrieb 33 auf, wie die Antriebsstufe 4, so dass also durch den selben Antrieb 33, der vorzugsweise ein gesteuerter oder geregelter elektromotorischer Antrieb ist, die Antriebsrolle der ersten Antriebsstufe 4 und die Antriebsrolle der zweiten Antriebsstufe 10 angetrieben wird.

Nach der zweiten Antriebsstufe 10 gelangt der Draht zur oberen Schweissrolle 17. Entlang des Drahtverlaufs dorthin können weitere Umlenkrollen und auch Kühlrollen für den Draht vorgesehen sein. Im gezeigten Beispiel sind eine Umlenkrolle 11, eine erste Kühlrolle 12, eine weitere Umlenkrolle 13 und eine zweite Kühlrolle 14 vorgesehen. Nach der zweiten Kühlrolle 14 gelangt der Draht 25 über die Umlenkrollen 15 und 16 zu der angetriebenen oberen Elektrodenrolle 17, auf welcher der Draht läuft bzw. die Elektrodenrolle teilweise umschlingt und die eigentliche Schweisselektrode als Drahtelektrode bildet.

Nach der oberen Elektrodenrolle 17 folgt vorzugsweise eine Umlenkrolle 18 mit einem kleinen Durchmesser, der bevorzugt weniger als 50% des Durchmessers der Elektrodenrolle 17 beträgt und insbesondere nur einen Durchmesser von 40% bis 20% vom Durchmesser der Elektrodenrolle 17 aufweist. Auf diese Umlenkrolle 18 mit kleinem Durchmesser folgt die dritte Antriebsstufe 20, allenfalls unter Zwischenschaltung einer weiteren Umlenkrolle 19. Die dritte Antriebsstufe 20 weist bevorzugt denselben Antrieb 33, insbesondere Elektromotor, auf, wie die erste und die zweite Antriebsstufe, könnte aber auch einen eigenen Antrieb aufweisen. Die dritte Antriebsstufe 20 weist eine weitere vom Antrieb der Antriebsstufe angetriebene Antriebsrolle auf, die den Draht reibschlüssig antreibt, indem der Draht diese Antriebsrolle der dritten Antriebsstufe 20 teilweise oder ganz umschlingt.

Danach kann der Draht über eine weitere Umlenkrolle 21 zu einem herkömmlichen Drahtzerhacker 22 geführt werden, der den Draht als wieder verwertbaren Abfall zerkleinert.

Dieser, hier als Ausführungsbeispiel dargestellte Drahtantrieb mit den drei Antriebsstufen ergibt die genannten Vorteile. Dabei erfolgt der Antrieb bei den drei Antriebsstufen nicht mit derselben Geschwindigkeit, und zwar mit entlang des Drahtverlaufs zunehmender Geschwindigkeit, so dass auf den Draht mittels der drei Antriebsstufen entlang des Drahtverlaufs eine genau definierte Zugspannung wirkt, mit der der Draht eine definierte elastische Dehnung erfährt. Vorzugsweise wird diese Dehnung auf Grund der unterschiedlichen Antriebsgeschwindigkeiten mittels vergleichsweise kleinen Umlenkrollen für den Draht an definierten Stellen entlang des Drahtverlaufs bewirkt, an denen sich der Zug auf den Draht mittels der zweiten und dritten Antriebsstufe dehnend auswirkt. Die unterschiedlichen Antriebsgeschwindigkeiten werden bevorzugt dadurch erzeugt, dass die drei Antriebsrollen in den drei Antriebsstufen 4, 10 und 20 für den Drahtantrieb vom selben Antriebsmittel 33, z.B. einem Elektromotor und insbesondere Servomotor, mit genau der selben Drehzahl angetrieben werden, indem die drei Antriebsrollen auf der selben Welle des Motors angeordnet sind, dass aber die Durchmesser der drei Antriebsrollen für den Draht in den drei Antriebsstufen 4, 10 und 20 um einen vorbestimmten Wert geringfügig unterschiedlich sind, so dass sich mit der selben Drehgeschwindigkeit der Rollen für den von ihnen angetriebenen Draht jeweils eine unterschiedliche Drahtgeschwindigkeit ergibt. Diese führt zur bevorzugten Dehnung des Drahts.

Im gezeigten Beispiel ist in Figur 2 dargestellt, dass die Antriebsgeschwindigkeit für die Drahtelektrode in der ersten Antriebsstufe 4 nur 99,5 % der Antriebsgeschwindigkeit der Drahtelektrode in der zweiten Antriebsstufe 10 beträgt, die somit hier als 100% angenommen ist. Die Drahtelektrode wird damit zu einer elastischen Dehnung um 0,5 % gezwungen. Die erzwungene Dehnung um 0,5% ist ein bevorzugter Wert, eine davon abweichende Dehnung im Bereich von 0,3% bis 0,7% ist ebenfalls möglich und kann durch entsprechende Geschwindigkeitsdifferenz der beiden Antriebsstufen erzielt werden. Diese Dehnung erfolgt im Drahtverlauf praktisch dort, wo die Drahtelektrode um eine Rolle 7 mit kleinem Durchmesser umgelenkt wird. Im bevorzugten Beispiel ist dies eine Umlenkrolle 7 welche im Drahtverlauf direkt vor der unteren Elektrodenrolle 8 platziert ist. Unter kleinem Durchmesser wird dabei ein Durchmesser der Rolle 7 verstanden, welcher ca. 70% bis 30% des Durchmessers der unteren Rollenelektrode 8 beträgt. Bevorzugt ist ein Durchmesser der kleinen Rolle 7, der ca. 50% des Durchmessers der ersten bzw. unteren Elektrodenrolle 8 beträgt.

Zwischen der zweiten Antriebsstufe 10 und der dritten Antriebsstufe 20 ist bevorzugt eine weitere erzwungene elastische Dehnung von ebenfalls 0,5% vorgesehen, indem die dritte Antriebsstufe die Drahtelektrode mit einer Antriebsgeschwindigkeit von 100,5% antreibt. Auch hierbei ist die erzwungene Dehnung um 0,5% ein bevorzugter Wert und eine davon abweichende Dehnung im Bereich von 0,3% bis 0,7% ist ebenfalls möglich und kann durch entsprechende Gestaltung der dritten Antriebsstufe 20 erzielt werden. Auch diese Dehnung der Drahtelektrode wird im Drahtverlauf vorzugsweise an einer Rolle mit vergleichsweise kleinem Durchmesser bewirkt, wobei diese Rolle im Drahtverlauf der oberen bzw. zweiten Elektrodenrolle nachfolgt, insbesondere direkt nachfolgt. Im gezeigten Beispiel ist dies die Rolle 18. Diese weist insbesondere einen Durchmesser auf, der bevorzugt weniger als 50% des Durchmessers der Elektrodenrolle 17 beträgt und insbesondere nur einen Durchmesser von 40% bis 20% des Durchmessers der Elektrodenrolle 17 aufweist.

Es hat sich gezeigt, dass die erzwungene Dehnung des Elektrodendrahts bevorzugt sowohl zwischen der ersten und zweiten Antriebsstufe als auch zwischen der zweiten und dritten Antriebsstufe eine konstantere Drahtzugspannung vor und nach den Elektrodenrollen der Schweissvorrichtung ergibt und somit einen konstanten Durchlauf des Kupferdrahts bzw. der Drahtelektrode durch die Schweissvorrichtung. Dies ist vorteilhaft für die Schweissqualität. Anstelle der doppelten Dehnung mittels allen drei Antriebsstufen könnte auch nur eine Dehnung zwischen zwei benachbarten Antriebsstufen vorgesehen sein. Bevorzugt ist es, dass alle Rollen zwischen den beiden Elektrodenrollen jeweils einen Durchmesser aufweisen, der grösser oder gleich dem Durchmesser der unteren Elektrodenrolle 8 ist.

Durch die Antriebsstufen werden ferner die Einflüsse von Zuschnittungenauigkeiten der Zargen und von Brauen an den Schnittkanten auf die Schweissung verringert. Diese Ungenauigkeiten und Brauen verursachen unterschiedliche Reibungskräfte in der Z-Schiene und den Schweisswerkzeugen.

Bevorzugt ist es weiter, wie in Figur 2 dargestellt, dass die Antriebsgeschwindigkeit der zweiten Antriebsstufe 100% der Schweissgeschwindigkeit beträgt, oder ebenfalls bevorzugt eine um 0,1% geringere Geschwindigkeit als die Schweissgeschwindigkeit aufweist, die vom Antrieb der oberen Elektrodenrolle bestimmt wird. Damit kann sich bevorzugt eine ganz leichte Dehnung der Drahtelektrode von 0.1% zwischen der unteren Elektrodenrolle 8 und der oberen Elektrodenrolle 17 ergeben, wie dies in Figur 2 eingetragen ist.

Bei einer Schweissvorrichtung zum Längsnahtschweissen von Dosenzargen mit Elektrodenrollen 8, 17 werden im Drahtverlauf drei Antriebsstufen 4, 10, 20 vorgesehen, mittels welchen die Drahtelektroden zusätzlich zum Antrieb durch die Elektrodenrollen angetrieben wird. Es wird dabei durch die drei Antriebsstufen eine elastische Dehnung der Drahtelektrode bewirkt.

Die bevorzugte Verwendung der Erfindung ist das Längsnahtschweissen von Dosenzargen.

**Bezugszeichenliste**

| | | | |
|---|---|---|---|
| 1 | Drahteinlauf | 31 | Z-Schiene |
| 2 | Drahtprofilierung | 31' | Dosenzarge |
| 3 | Drahtausgleich | 32 | Antrieb Elektrodenrolle |
| 4 | erste Antriebsstufe | 33 | Antrieb |
| 5 | Umlenkrolle | | |
| 6 | Umlenkrolle im Schweissarm | | |
| 7 | Umlenkrolle zur unteren Schweissrolle | | |
| 8 | untere Schweissrolle | | |
| 9 | Umlenkrolle aus Schweissarm | | |
| 10 | zweite Antriebsstufe | | |
| 11 | Umlenkrolle | | |
| 12 | Kühlrolle | | |
| 13 | Umlenkrolle | | |
| 14 | Kühlrolle | | |
| 15 | Umlenkrolle | | |
| 16 | Umlenkrolle | | |
| 17 | obere Schweissrolle | | |
| 18 | Umlenkrolle | | |
| 19 | Umlenkrolle | | |
| 20 | dritte Antriebsstufe | | |
| 21 | Umlenkrolle | | |
| 22 | Zuführung zu Drahtzerhacker | | |
| 25 | Drahtelektrode | | |

## Patentansprüche

1. Schweissvorrichtung zum elektrischen Rollnahtschweissen, mit einer ersten Elektrodenrolle (8) und einer zweiten Elektrodenrolle (17), zwischen welchen Elektrodenrollen der Schweisspfad der Vorrichtung für das zu schweissende Gut verläuft und auf welchen Elektrodenrollen eine gemeinsame Drahtelektrode (25) läuft, die in der Vorrichtung einen vorbestimmten Verlauf nimmt, wobei die zweite Elektrodenrolle (17) von einem eigenen Antrieb (32) zur Drehung mit der einstellbaren Soll-Schweissgeschwindigkeit antreibbar ist, wobei zusätzlich zum Antrieb der Drahtelektrode durch die angetriebene Elektrodenrolle, drei Antriebsstufen (4, 10, 20) für die Drahtelektrode derart vorgesehen sind, dass die erste Antriebsstufe (4) im Drahtverlauf vor der ersten Elektrodenrolle (8) auf die Drahtelektrode einwirkt , dass die zweite Antriebsstufe (10) im Drahtverlauf zwischen der ersten Elektrodenrolle (8) und der zweiten Elektrodenrolle (17) auf die Drahtelektrode einwirkt und dass die dritte Antriebsstufe im Drahtverlauf nach der zweiten Elektrodenrolle (17) auf die Drahtelektrode einwirkt, **dadurch gekennzeichnet, dass** mindestens zwei der Antriebsstufen (4, 10, 20), und insbesondere, dass alle drei Antriebsstufen, einen gemeinsamen Antriebsmotor (33) für den Antrieb der Drahtelektrode aufweisen, dass die Antriebsstufen (4, 10, 20) zum Antrieb der Drahtelektrode je mindestens eine Antriebsrolle aufweisen, welche von der Drahtelektrode teilweise oder ganz umschlungen wird und dass die Antriebsrollen der Antriebsstufen unterschiedliche Durchmesser aufweisen, wobei die Antriebsrolle der ersten Antriebsstufe (4) einen kleineren Durchmesser hat als die Antriebsrolle der zweiten Antriebsstufe (10), und dass die Antriebsrolle der dritten Antriebsstufe (20) einen grösseren Durchmesser hat als die Antriebsrolle der zweiten Antriebsstufe (10).

2. Schweissvorrichtung nach Anspruch 1, **dadurch gekennzeichnet, dass** im Drahtverlauf vor der ersten Elektrodenrolle (8), insbesondere direkt vor der ersten Elektrodenrolle (8), eine die Drahtelektrode umlenkende Umlenkrolle (7) vorgesehen ist, deren Durchmesser im Bereich von 70% bis 30% des Durchmessers der ersten Elektrodenrolle (8) liegt, und deren Durchmesser insbesondere bei ca. 50% des Durchmessers der ersten Elektrodenrolle (8) liegt.

3. Schweissvorrichtung nach Anspruch 1 oder 2, **dadurch gekennzeichnet, dass** im Drahtverlauf nach der zweiten Elektrodenrolle (17), insbesondere direkt nach der zweiten Elektrodenrolle (17), eine die Drahtelektrode umlenkende zweite Umlenkrolle (18) vorgesehen ist, deren Durchmesser kleiner als ca. 50% des Durchmessers der zweiten Elektroderolle (17), und insbesondere Bereich von 40% bis 20% des Durchmessers der zweiten Elektrodenrolle (17) liegt.

4. Schweissvorrichtung nach einem der Ansprüche 1 bis 3, **dadurch gekennzeichnet, dass** alle im Drahtverlauf zwischen den beiden Elektrodenrollen (8, 17) liegende Rollen (9 bis 16) jeweils einen Durchmesser aufweisen, der grösser oder gleich dem Durchmesser der ersten Elektrodenrolle (8) ist.

5. Verfahren zum Schweissen von Behälterzargen, bei welchem die Zargen zwischen einer ersten und einer zweiten Elektrodenrolle (8, 17), auf welchen eine gemeinsame Drahtelektrode (25) läuft, hindurch laufen und durch elektrisches Widerstandsschweissen längsnahtverschweisst werden, wobei mindestens eine der Elektrodenrollen angetrieben ist, wobei entlang des Drahtverlaufs, zusätzlich zum Antrieb der Elektrodenrolle, an drei Stellen gleichzeitig durch je eine Antriebsstufe (4, 10, 20) ein Antrieb der Drahtelektrode erfolgt, wobei die Drahtelektrode vor der ersten Elektrodenrolle angetrieben wird, die Drahtelektrode zwischen der ersten und der zweiten Elektrodenrolle angetrieben wird und die Drahtelektrode nach der zweiten Elektrodenrolle angetrieben wird, wobei der Draht durch mindestens zwei aufeinander folgende Antriebe der drei Antriebe in den zwischen den Antrieben liegenden Bereichen elastisch gedehnt wird, indem der zweite Antrieb rascher erfolgt als der erste Antrieb und/oder der dritte Antrieb rascher erfolgt als der zweite Antrieb, **dadurch gekennzeichnet, dass** mindestens zwei der Antriebsstufen (4, 10, 20), und insbesondere, dass alle drei Antriebsstufen, einen gemeinsamen Antriebsmotor (33) für den Antrieb der Drahtelektrode aufweisen, dass die Antriebsstufen (4, 10, 20) zum Antrieb der Drahtelektrode je mindestens eine Antriebsrolle aufweisen, welche von der Drahtelektrode teilweise oder ganz umschlungen wird und dass die Antriebsrollen der Antriebsstufen unterschiedliche Durchmesser aufweisen, wobei die Antriebsrolle der ersten Antriebsstufe (4) einen kleineren Durchmesser hat als die Antriebsrolle der zweiten Antriebsstufe (10), und dass die Antriebsrolle der dritten Antriebsstufe (20) einen grösseren Durchmesser hat als die Antriebsrolle der zweiten Antriebsstufe (10).

6. Verfahren nach Anspruch 5, **dadurch gekennzeichnet, dass** die Dehnung ca. 0.5% beträgt.

7. Verfahren nach einem der Ansprüche 5 oder 6, **dadurch gekennzeichnet, dass** der zweite Antrieb die Drahtelektrode ca. 0, 1% langsamer als die Schweissgeschwindigkeit antreibt.

8. Verwendung des Verfahrens nach einem der Ansprüche 5 bis 7 zum Längsnahtschweissen von Dosenzargen.

## Claims

1. Welding device for electric seam welding, with a first electrode roller (8) and a second electrode roller (17), wherein the welding path of the device for the objects to be welded lies between the electrode rollers and wherein a common wire electrode (25) which adopts a predefined wire path in the device, runs on the electrode rollers, wherein the second electrode roller (17) is driven by an own drive (32) for rotating with the adjustable nominal welding speed, wherein three driving stages (4, 10, 20) are provided for the wire electrode in addition to the drive of the wire electrode by the driven electrode roller, in such a way that the first drive stage (4) acts upon the wire electrode in the path of the wire before the first electrode roller (8), that the second drive stage (10) acts upon the wire electrode in the path of the wire between the first electrode roller (8) and the second electrode roller (17) and that the third drive stage acts upon the wire electrode in the path of the wire after the second electrode roller (17), **characterized in that** at least two of the drive stages (4, 10, 20) have a common drive motor (33) for the drive of the wire electrode, and particularly **in that** all three drive stages have a common drive motor (33) for the drive of the wire electrode, **in that** the drive stages (4, 10, 20) have each at least a drive roller for the drive of the wire electrode, around which the wire electrode is partly or entirely wound, and **in that** the drive rollers of the drive stages have different diameters, wherein the drive roller of the first drive stage (4) has a smaller diameter than the drive roller of the second drive stage (10) and the drive roller of the third drive stage (20) has a larger diameter than the drive roller of the second drive stage (10).

2. Welding device according to claim 1, **characterized in that** a deflecting roller (7) which deflects the wire electrode is provided in the path of the wire before the first electrode roller (8), particularly directly before the first electrode roller (8), the diameter of which is in the range of 70% to 30% of the diameter of the first electrode roller (8), and the diameter of which is of around 50% of the diameter of the first electrode roller (8).

3. Welding device according to claim 1 or 2, **characterized in that** a second deflecting roller (18) which deflects the wire electrode is provided in the path of the wire after the second electrode roller (17), particularly directly after the second electrode roller (17), the diameter of which is smaller than around 50% of the diameter of the second electrode roller (17), and particularly is in the range of 40% to 20% of the diameter of the second electrode roller (17).

4. Welding device according to one of the claims 1 to 3, **characterized in that** all rollers (9 to 16) situated in the path of the wire between the two electrode rollers (8, 17) have each a diameter which is larger than or equal to the diameter of the first electrode roller (8).

5. Method for welding container bodies for which the bodies pass between a first and a second electrode roller (8, 17), on which a common wire electrode (25) runs, and wherein the bodies are longitudinally seam welded by electric resistance welding, wherein at least one of the electrode rollers is driven, wherein a drive of the wire electrode is provided simultaneously at three positions along the path of the wire by a drive stage (4, 10, 20) each, additionally to the drive of the electrode roller, wherein the wire electrode is actuated before the first electrode roller, the wire electrode is actuated between the first and the second electrode roller and the wire electrode is actuated after the second electrode roller, wherein the wire is elastically stretched in the areas between the drive stages by at least two subsequent drive stages of the three drive stages, in such a way that the second drive is faster than the first drive and/or the third drive is faster than the second drive, **characterized in that** at least two of the drive stages (4, 10, 20) have a common drive motor (33) for the drive of the wire electrode, and particularly **in that** all three drive stages, have a common drive motor (33) for the drive of the wire electrode, **in that** the drive stages (4, 10, 20) have each at least a drive roller for the drive of the wire electrode, around which the wire electrode is partly or entirely wound, and **in that** the drive rollers of the drive stages have different diameters, wherein the drive roller of the first drive stage (4) has a smaller diameter than the drive roller of the second drive stage (10) and the drive roller of the third drive stage (20) has a larger diameter than the drive roller of the second drive stage (10).

6. Method according to claim 5, **characterized in that** the stretching amounts to around 0.5%.

7. Method according to one of the claims 5 or 6, **characterized in that** the second drive stage drives the wire electrode around 0.1% slower than the welding speed.

8. Use of the method according to one of claims 5 to 7 for longitudinal seam welding of can bodies.

## Revendications

1. Dispositif de soudage à la molette, avec un premier rouleau d'électrode (8) et un deuxième rouleau d'électrode (17), entre lesquels le chemin de soudage du dispositif pour les objets à souder est arrangé et sur lesquels un fil-électrode (25) commun bouge, qui adopte un chemin du fil prédéfini dans le dispositif, le deuxième rouleau d'électrode (17) étant actionné par un propre moteur (32) afin de tourner avec la vitesse de soudage nominale ajustable, trois étages de moteurs (4, 10, 20) étant prévus pour le fil-électrode en plus du moteur du fil-électrode par le rouleau d'électrode actionné, de sorte que le premier étage de moteur (4) agit sur le fil-électrode dans le chemin du fil avant le premier rouleau d'électrode (8), que le deuxième étage de moteur (10) agit sur le fil-électrode sur le chemin du fil entre le premier rouleau d'électrode (8) et le deuxième rouleau d'électrode (17) et que le troisième étage de moteur agit sur le fil-électrode sur le chemin du fil après le deuxième rouleau d'électrode (17), **caractérisé en ce qu'**au moins deux des trois étages de moteur (4, 10, 20) ont un moteur d'actionnement commun (33) pour l'actionnement du fil-électrode, et particulièrement **en ce que** tous les trois étages de moteur ont un moteur d'actionnement commun (33) pour l'actionnement du fil-électrode, **en ce que** les étages de moteur (4, 10, 20) ont chacun au moins un rouleau d'actionnement pour l'actionnement du fil-électrode, autour duquel le fil-électrode est partiellement ou entièrement enroulé, et **en ce que** les rouleaux d'actionnement des étages de moteur ont des diamètres différents, le rouleau d'actionnement du premier étage de moteur (4) ayant un diamètre inférieur auquel du rouleau d'actionnement du deuxième étage de moteur (10) et le rouleau d'actionnement du troisième étage de moteur (20) ayant un diamètre supérieur auquel du rouleau d'actionnement du deuxième étage de moteur (10).

2. Dispositif de soudage selon la revendication 1, **caractérisé en ce qu'**un rouleau de déviation (7) qui dévie le fil-électrode est prévu sur le chemin du fil avant le premier rouleau d'électrode (8), particulièrement directement avant le premier rouleau d'électrode (8), le diamètre duquel est compris entre 70% et 30% du diamètre du premier rouleau d'électrode (8), et le diamètre duquel est d'environ 50% du diamètre du premier rouleau d'électrode (8).

3. Dispositif de soudage selon la revendication 1 ou 2, **caractérisé en ce qu'**un deuxième rouleau de déviation (18) qui dévie le fil-électrode est prévu sur le chemin du fil après le deuxième rouleau d'électrode (17), particulièrement directement après le deuxième rouleau d'électrode (17), le diamètre duquel est inférieur d'environ 50% du diamètre du deuxième rouleau d'électrode (17), et particulièrement est compris entre 40% et 20% du diamètre du deuxième rouleau d'électrode (17).

4. Dispositif de soudage selon l'une des revendications 1 à 3, **caractérisé en ce que** tous rouleaux (9 à 16) situés sur le chemin du fil entre les deux rouleaux d'électrode (8, 17) ont chacun un diamètre supérieur ou égale au diamètre du premier rouleau d'électrode (8).

5. Procédé de soudage de corps de récipients, les corps passant entre un premier et un deuxième rouleau d'électrode (8, 17), sur lequel un fil-électrode (25) commun bouge, les corps étant soudés aux joints en direction longitudinale par soudage par résistance électrique, au moins un des rouleaux d'électrode étant actionné, un moteur du fil-électrode étant prévu simultanément en trois positions le long du chemin du fil par un étage de moteur (4, 10, 20) chacun, en plus du moteur du rouleau d'électrode, le fil-électrode étant actionné avant le premier rouleau d'électrode, le fil-électrode étant actionné entre le premier et le deuxième rouleau d'électrode et le fil-électrode étant actionné après le deuxième rouleau d'électrode, le fil étant élastiquement allongé dans les zones entre les étages de moteur par au moins deux étage de moteur consécutifs des trois étage de moteur, de sorte que le deuxième moteur est plus rapide que le premier moteur et/ou le troisième moteur est plus rapide que le deuxième moteur, **caractérisé en ce qu'**au moins deux des trois étages de moteur (4, 10, 20) ont un moteur d'actionnement commun (33) pour l'actionnement du fil-électrode, et particulièrement **en ce que** tous les trois étages de moteur ont un moteur d'actionnement commun (33) pour l'actionnement du fil-électrode, **en ce que** les étages de moteur (4, 10, 20) ont chacun au moins un rouleau d'actionnement pour l'actionnement du fil-électrode, autour duquel le fil-électrode est partiellement ou entièrement enroulé, et **en ce que** les rouleaux d'actionnement des étages de moteur ont des diamètres différents, le rouleau d'actionnement du premier étage de moteur (4) ayant un diamètre inférieur auquel du rouleau d'actionnement du deuxième étage de moteur (10) et le rouleau d'actionnement du troisième étage de moteur (20) ayant un diamètre supérieur auquel du rouleau d'actionnement du deuxième étage de moteur (10).

6. Procédé selon la revendication 5, **caractérisé en ce que** l'allongement est d'environ 0.5%.

7. Procédé selon la revendication 5 ou 6, **caractérisé en ce que** le deuxième étage de moteur actionne le fil-électrode environ 0.1% plus lentement que la vitesse de soudage.

8. Utilisation du procédé selon l'une des revendications 5 à 7 pour le soudage par résistance électrique longitudinal des corps de boîte.
